# EUROPÄISCHE PATENTSCHRIFT

(11) **EP 4 069 971 B1**
(45) Veröffentlichungstag und Bekanntmachung des Hinweises auf die Patenterteilung: **23.04.2025**
(21) Anmeldenummer: 20815734.7
(22) Anmeldetag: 20.11.2020
(51) Int. Cl.: F03D 13/20, E02B 17/00, E02B 17/02, E04H 12/08

(54) **ÜBERGANGSSTÜCK FÜR EINEN TURM EINER WINDENERGIEANLAGE UND TURM EINER WINDENERGIEANLAGE**
TRANSITION PIECE FOR A TOWER OF A WIND TURBINE, AND TOWER OF A WIND TURBINE
PIÈCE DE TRANSITION POUR UNE TOUR D'UNE TURBINE ÉOLIENNE ET TOUR D'UNE TURBINE ÉOLIENNE

(30) Priorität: 02.12.2019 DE 102019218687
(43) Veröffentlichungstag der Anmeldung: 12.10.2022
(73) Patentinhaber: ThyssenKrupp Steel Europe AG, 47166 Duisburg (DE)
(72) Erfinder: KOTTKAMP, Klaus, 47167 Duisburg (DE); QAIMI, Siear, 42489 Wülfrath (DE); GALAL, Galal, 26603 Aurich (DE)
(74) Vertreter: ThyssenKrupp Steel Europe AG
(86) Internationale Anmeldenummer: PCT/EP2020/082785
(87) Internationale Veröffentlichungsnummer: WO 2021/110424

(56) Entgegenhaltungen:
- EP-A1- 2 751 424
- EP-A2- 2 094 969
- GB-A- 2 476 051
- GB-A- 2 507 248

## Beschreibung

### Technisches Gebiet (Technical Field)

Die Erfindung betrifft ein Übergangsstück für einen Turm einer Windenergieanlage, - mit einem zylinderförmigen Mantelstück, welches eine Mantelinnenfläche, eine Mantelaußenfläche und einen Anbindungsflansch umfasst; - mit einem Bodenstück, welches das Mantelstück zumindest abschnittsweise einseitig abschließt; - mit mindestens drei zylinderförmigen Elementen, welche zumindest abschnittsweise stoffschlüssig mit dem Mantelstück verbunden sind und jeweils an ihrem dem Mantelstück abgewandten Ende einen Anbindungsflansch aufweisen. Des Weiteren betrifft die Erfindung einen Turm einer Windenergieanlage.

### Technischer Hintergrund (Background Art)

Türme für Windenergieanlagen sind aus dem Stand der Technik bekannt. Hybridtürme, bestehend aus einer Gitterstruktur im unteren Teil und einem zylindrischen Turm im oberen Teil, können als eine denkbare Lösung für größere Windturbinen konzipiert werden, um beispielsweise hohe Türme mit großen Nabenhöhen realisieren zu können, um ausreichend Wind zur Energiegewinnung vorzufinden, so dass Windenergieanlagen insbesondere auch in Schwachwindgebieten wirtschaftlich betrieben werden können. Ein beispielhafter Ansatz ist für den Offshore-Bereich in der Offenlegungsschrift EP 2 067 914 A2 und für den Onshore-Bereich in der Offenlegungsschrift DE 10 2012 106 772 A1 beschrieben.

Hybridtürme mit einer Gitterstruktur im unteren Teil und einem zylindrischen Turm im oberen Teil erfordern jedoch ein Übergangsstück, welches als Verbindung zwischen Gitterstruktur und zylindrischem Turm eine homogene Lastenverteilung vornimmt. Da das Übergangsstück alle dynamischen und extremen Lasten des oberhalb platzierten zylindrischen Turms auf die untere Gitterstruktur und auf das Fundament homogen übertragen soll, muss das Verbindungselement Eigenschaften aufweisen, die den starken zyklischen Biegemomenten, Querkräften und axialen Belastungen standhalten. Beispielhafte Ansätze zur Ausgestaltung von Übergangsstücken sind in den Druckschriften EP 2 597 227 B1, EP 2 647 764 B1 und US 2014/0345218 A1 offenbart. Ein gattungsgemäßes Übergangsstück beschreibt die Offenlegungsschrift DE 10 2013 110 495 A1. GB2507248 A ist ein weiteres Beispiel eines Übergangsstücks aus dem Stand der Technik.

Die Tragstruktur eines Turms respektive der Turm einer Windenergieanlage ist durch den unstetigen Wind und den damit verbundenen Windturbulenzen enormen dynamischen Kräften ausgesetzt, die einen erheblichen Einfluss auf die Ermüdungsfestigkeit und somit auf die Lebensdauer solcher Strukturen haben. Insbesondere nehmen die Windturbulenzen mit zunehmender Höhe ab und wirken sich somit positiv auf das Ermüdungsverhalten und dadurch auf die Wirtschaftlichkeit der Gesamtanlage aus Turbine, Rotorblätter und Tragstruktur respektive Turm aus. In Bezug auf das Übergangsstück besteht hinsichtlich der Stand- und Betriebsfestigkeit, insbesondere zur sicheren Ableitung von Kräften aus dem zylindrischen Turm im oberen Teil in die Gitterstruktur im unteren Teil innerhalb eines Turms einer Windenergieanlage, Optimierungspotential.

### Zusammenfassung der Erfindung (Summary of Invention)

Der Erfindung liegt somit die Aufgabe zu Grunde, ein Übergangsstück für einen Turm einer Windenergieanlage bereitzustellen, welcher kosten- und kraftflussoptimiert zur sicheren Ableitung von Kräften aus dem zylindrischen Turm im oberen Teil in die Gitterstruktur im unteren Teil innerhalb eines Turms einer Windenergieanlage ausleg- und/oder herstellbar ist.

Gelöst wird diese Aufgabe gemäß einer ersten Lehre durch ein Übergangsstück mit den Merkmalen des Patentanspruchs 1. Gelöst wird diese Aufgabe gemäß einer zweiten Lehre durch einen Turm mit den Merkmalen des Patentanspruchs 9.

Erfindungsgemäß sind die zylinderförmigen Elemente derart mit dem Mantelstück verbunden, dass das Mantelstück das zylinderförmige Element zumindest abschnittsweise in ihrer Längserstreckung in einen Außenteilabschnitt und in einen Innenteilabschnitt unterteilt, wobei der Außenteilabschnitt mit der Mantelaußenfläche und der Innenteilabschnitt mit der Mantelinnenfläche verbunden sind.

Die Erfindung stellt ein kosten- und kraftflussoptimiertes Übergangsstück zur sicheren Ableitung von Kräften aus dem zylindrischen Turm im oberen Teil in die Gitterstruktur im unteren Teil innerhalb eines Turms einer Windenergieanlage bereit. Durch die vorteilhafte durchgehende Ausführung des zylinderförmigen Mantelstücks, welche das zylinderförmige Element zumindest abschnittsweise in ihrer Längserstreckung in einen Außenteilabschnitt und in einen Innenteilabschnitt unterteilt, erfolgt eine im Wesentlichen tangentiale Verbindung des Außenteilabschnitts an der Mantelaußenfläche und des Innenteilabschnitts an der Mantelinnenfläche, so dass die anfallenden statischen und dynamischen Lasten optimal vom Oberteil in Form eines zylindrischen Turms auf ein Unterteil in Form einer Gitterstruktur übertragen werden können. Durch diese Art der Lastübertragung kann eine homogene Übertragung der Momente und/oder Kräfte erzielt werden. Dadurch kann vermieden werden, dass eine Spannungskonzentration die Lebensdauer der Tragstruktur eines Turms respektive des Turms einer Windenergieanlage negativ beeinflusst. Durch die entsprechende Ausgestaltung aus Oberteil, Übergangsstück und Unterteil für einen Turm einer Windenergieanlage kann diese optimal an die am Erstellungsort hohen dynamischen Belastungen, insbesondere auch für zyklische Betriebslasten ausgelegt werden. Dadurch sind Windenergieanlagen mit großer Nabenhöhe auslegbar und/oder wirtschaftlich herstellbar. Unter Nabenhöhe ist die Nabe des Windrotors der Windenergieanlage über der Geländeoberfläche (Aufstellungsort) zu verstehen.

Das zylinderförmige Mantelstück des erfindungsgemäßen Übergangsstücks weist insbesondere einen im Wesentlichen kreisförmigen Querschnitt auf, wobei vorzugsweise der Durchmesser des Mantelstücks bis zu 4,4 m betragen kann, so dass eine Verwendung von Segmenten zur Erstellung eines Oberteils in Form eines zylindrischen Turms bzw. Rohrturms bis zu einem Durchmesser von ca. 4,4 m sichergestellt werden kann, da diese Segmente bis zu dieser Größenordnung unproblematisch in Hallen oder Werkstätten herstellbar und als Schwertransport über vorhandene Verkehrswege zum Montage-/Aufstellungsort transportierbar sind. Das Unterteil in Form einer Gitterstruktur eines Turms einer Windenergieanlage besteht aus Längsstreben, Querstreben und Diagonalstreben, welche aus Profilen gebildet sein können, entweder jeweils aus einem Hohlprofil oder aus einem Vollmaterial oder einer Kombination daraus bestehen. Der Querschnitt der Profile kann individuell ausgebildet sein. Die Längsstrebe hat insbesondere einen größeren Durchmesser im Vergleich zur Querstrebe und/oder Diagonalstrebe. Wird ein Hohlprofil verwendet, ist es beispielsweise ein längs- oder ein spiralnahtgeschweißtes Rohr. Besonders bevorzugt weisen Längsstrebe, Querstrebe und Diagonalstrebe einen kreisrunden Querschnitt auf. Weiter bevorzugt können die Profile standardisierte Profile sein, die kostengünstig herstellbar sind und dadurch je nach Ausgestaltung der Gitterstruktur individuell auf die gewünschte Länge zuschneidbar sind. Mindestens zwei oder mehrere in Längserstreckung zusammengesetzte Längsstreben bilden jeweils ein Eckstiel, wobei die Gitterstruktur mindestens drei Eckstiele umfasst. Die Quer- und/oder Diagonalstreben verlaufen jeweils zwischen den Eckstielen und sind mit diesen verbunden, entweder auf einer Ebene (Querstrebe) oder zwischen zwei Ebenen (Diagonalstrebe) an einem erstellten Turm. Die Anbindung bzw. Verbindung zwischen den einzelnen Längsstreben, der Diagonal- und/oder Querstreben kann über Knotenelemente erfolgen.

Eine größen- und gewichtsoptimierte Turmkonstruktion unter Berücksichtigung der erforderlichen Steifigkeit, Knickfestigkeit und Dauerfestigkeit ist dadurch im Wesentlichen möglich.

Weitere vorteilhafte Ausgestaltungen und Weiterbildungen gehen aus der nachfolgenden Beschreibung hervor. Ein oder mehrere Merkmale aus den Ansprüchen, der Beschreibung wie auch der Zeichnung können mit einem oder mehreren anderen Merkmalen daraus zu weiteren Ausgestaltungen der Erfindung verknüpft werden. Es können auch ein oder mehrere Merkmale aus den unabhängigen Ansprüchen durch ein oder mehrere andere Merkmale verknüpft werden.

Gemäß einer Ausgestaltung des erfindungsgemäßen Übergangsstücks sind die zylinderförmigen Elemente konisch ausgebildet oder weisen im Wesentlichen die Form eines Kegelstumpfes auf. Durch die konische Ausgestaltung bzw. Kegelstumpfform kann insbesondere der Kraftfluss gesteuert werden, insbesondere durch den Verlauf respektive der Anordnung der Verjüngung des Querschnitts des respektive der zylindrischen Elemente in Richtung des Unterteils des Turms in Form einer Gitterstruktur.

Gemäß einer Ausgestaltung des erfindungsgemäßen Übergangsstücks definieren die zylinderförmigen Elemente jeweils eine Längsachse und das Mantelstück eine Längsachse, wobei die Längsachsen der zylinderförmigen Elemente jeweils in einem spitzen Winkel zur Längsachse des Mantelstücks verlaufen. Der spitze Winkel nimmt einen Wert zwischen größer 0° und maximal 45°, insbesondere maximal 30°, vorzugsweise maximal 25°, bevorzugt maximal 20° ein. Durch die "angewinkelte" Ausrichtung der zylindrischen Elemente, welche u. a. die Funktion haben, anfallende Lasten großflächig, homogen vom rohrförmigen Oberteil eines Turms aufzunehmen, können diese dann konzentriert auf das darunter befindliche Unterteil des Turms übertragen werden. Mit einer Veränderung des Winkels und insbesondere in Kombination mit der Dimensionierung der zylindrischen Elemente, vorzugsweise des Durchmessers, kann bevorzugt einer bedarfsgerechten Lastenverteilung Rechnung getragen werden.

Erfindungsgemäß umfasst das Übergangsstücks mindestens eine Ringsteife, wobei sie unterhalb und mit Abstand zum Anbindungsflansch des Mantelstücks innerhalb und/oder außerhalb des Mantelstücks angeordnet sein kann. Die Ringsteife ist ringförmig ausgebildet. Ist die Ringsteife innerhalb des Mantelstücks vorgesehen, ist sie derart bemessen, dass ein Stoffschluss an die Mantelinnenfläche erfolgen kann. Ist die Ringsteife alternativ oder zusätzlich außerhalb des Mantelstücks vorgesehen, ist sie derart bemessen, dass ein Stoffschluss an die Mantelaußenfläche erfolgen kann. Vorzugsweise kann die innerhalb und/oder außerhalb des Mantelstücks angeordnete Ringsteife zumindest bereichsweise mit dem dem Anbindungsflansch gegenüberliegenden Ende des zylinderförmigen Elements stoffschlüssig verbunden sein, wodurch der Kraftfluss weiter verbessert werden kann. Die Verwendung mindestens einer Ringsteife kann auch zu einer Materialdickenreduzierung des zylinderförmigen Mantelstücks führen.

Gemäß einer Ausgestaltung des erfindungsgemäßen Übergangsstücks weist das zylinderförmige Element mindestens eine Zugangsöffnung auf. Die Zugangsöffnung ermöglicht einen Zugang zu dem Innenbereich des zylinderförmigen Elements, so dass bei der stoffschlüssigen Verbindung zwischen den zylinderförmigen Elementen und dem zylinderförmigen Mantelstück insbesondere ein vollständiges Durchschweißen ermöglicht werden kann. Alternativ oder zusätzlich kann mindestens eine Zugangsöffnung auch in dem Mantelstück eingebracht sein, insbesondere im Bereich des stoffschlüssig zu verbindenden zylinderförmigen Elements.

Gemäß einer Ausgestaltung des erfindungsgemäßen Übergangsstücks ist der Innenteilabschnitt des zylinderförmigen Elements zumindest teilbereichsweise abgeschnitten. Dies ist insbesondere von Vorteil, um Raum zur Unterbringung von Komponenten, wie beispielsweise elektrische Anschluss- und Steuerungselemente, innerhalb des Mantelstücks bereitstellen zu können, so dass auf sonst übliche Weise auf dem Gelände zusätzlich aufgestellte Container, was mit Zusatzkosten verbunden wäre und/oder wodurch ein unberechtigter Zugang nur unzureichend sichergestellt werden könnte, verzichtet werden kann. Bevorzugt kann das Übergangsstück in einer Halle oder Werkstatt zusammengebaut werden, so dass auch die Unterbringung und Installation von elektrischen Komponenten montageseitig bereits in der Halle oder Werkstatt erfolgen kann und somit als eine Einheit zum Montage-/Aufstellungsort transportiert werden kann. Neben einem kostenoptimierten logistischen Effekt hat dieses Vorgehen zudem den Vorteil, dass bereits im Vorfeld in der Halle oder Werkstatt eine fachmännische Installation und Überprüfung der elektrischen Komponenten vorgenommen werden kann, so dass diese aufwändigen Arbeiten nicht mehr am Montage-/Aufstellungsort anfallen.

Gemäß einer Ausgestaltung des erfindungsgemäßen Übergangsstücks weist das Bodenstück mindestens eine Zugangsöffnung auf. Die Zugangsöffnung kann beispielsweise als Zentralöffnung im Bodenstück ausgebildet sein. Die Zugangsöffnung ermöglicht einen Zugang zu dem Innenbereich des zylinderförmigen Mantelstücks. An der Zugangsöffnung kann beispielsweise ein senkrechter Kanal angeschlossen werden, welcher bis zum Boden respektive bis auf das Fundament geführt werden kann. Der Kanal soll nicht vorwiegend zur Lastabtragung, sondern zur Installation einer Treppe, insbesondere Wendeltreppe oder eines Montage-/Revisionsaufzugs genutzt werden.

Gemäß einer Ausgestaltung des erfindungsgemäßen Übergangsstücks weisen die Anbindungsflansche Durchgangsöffnungen zur Aufnahme von Befestigungsmitteln auf. Unter Durchgangsöffnungen sind beispielsweise Bohrungen zu verstehen, welche eine Aufnahme und/oder ein Durchschieben von Befestigungsmitteln ermöglichen, beispielsweise in Form von Schrauben-Mutter-Verbindungen. Mit der vorgenannten großflächig übertragenen Lastenübergabe kann eine gleichmäßige Belastung der Befestigungsmittel gewährleistet werden. Die Verbindungen zwischen Oberteil in Form eines zylindrischen Turms und Unterteil in Form einer Gitterstruktur eines Turms einer Windenergieanlage und dem erfindungsgemäßen Übergangsstück werden mittels Flanschverbindungen realisiert, insbesondere in Kombination mit mechanischen Verbindungen, beispielsweise in Form von Schrauben-Mutter-Verbindungen.

Gemäß einem zweiten Aspekt betrifft die Erfindung einen Turm einer Windenergieanlage mit einem Oberteil in Form eines zylindrischen Turms, einem Unterteil in Form einer Gitterstruktur und einem erfindungsgemäßen Übergangsstück, welches das Oberteil mit dem Unterteil verbindet.

Gemäß einer Ausgestaltung des erfindungsgemäßen Turms ist das Übergangsstück über den Anbindungsflansch des zylinderförmigen Mantelstücks mit dem Oberteil und über die Anbindungsflansche der zylinderförmigen Elemente mit dem Unterteil mechanisch verbunden. Durch die mechanische Verbindung kann der Verbindungsaufwand während der Errichtung des Turms am Montage-/Aufstellungsort reduziert werden.

Um Wiederholungen zu vermeiden, wird auf die vorteilhaften Ausgestaltungen des erfindungsgemäßen Übergangsstücks verwiesen.

### Beschreibung der bevorzugten Ausführungsformen (Best Mode for Carrying out the Invention)

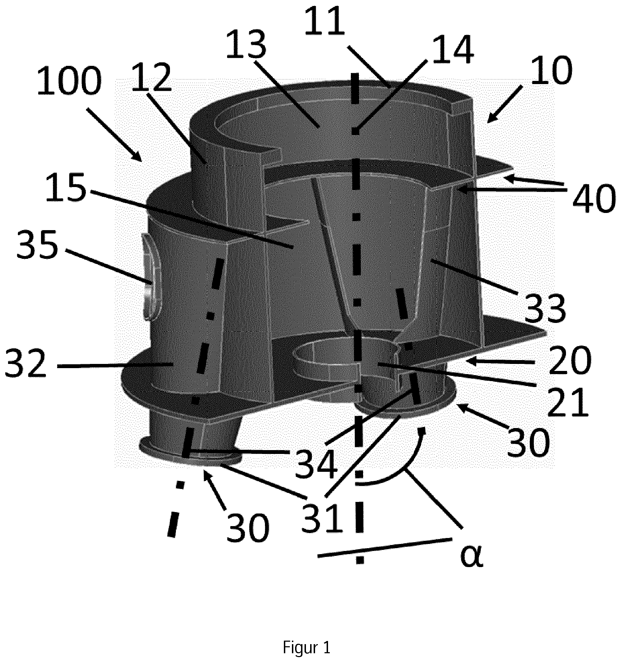

In der einzigen **Figur 1** ist eine schematische, perspektivische Teilschnittdarstellung eines erfindungsgemäßen Übergangsstücks (100) gezeigt. Das Übergangsstück (100) für einen nicht dargestellten Turm einer Windenergieanlage umfasst ein zylinderförmiges Mantelstück (10) mit einer Mantelinnenfläche (13), einer Mantelaußenfläche (12) und einem Anbindungsflansch (11). Das zylinderförmige Mantelstück (10) weist vorzugsweise einen kreisförmigen Querschnitt auf, welcher insbesondere durchgehend einheitlich in Längserstreckung respektive entlang seiner Längsachse (14) des Mantelstücks (10) ausgeführt ist. Das zylinderförmige Mantelstück (10) kann aus einem Teil oder mehreren Teilen, insbesondere aus mehreren Segmenten, vorzugsweise aus einem Stahlwerkstoff gefertigt sein, nicht dargestellt. Der Anbindungsflansch (11) ist entweder einstückig an dem Mantelstück (10) nach innen oder nach außen ragend angeformt, oder vorzugsweise bestehend aus einem separaten Teil oder mehreren separaten Teilen am oberen Ende des Mantelstücks (10) nach innen oder nach außen ragend (nicht dargestellt) angebunden, bevorzugt stoffschlüssig. Der Anbindungsflansch (11) kann ebenfalls aus einem Stahlwerkstoff bestehen. Das Mantelstück (10) ist zumindest abschnittsweise einseitig mit einem Bodenstück (20), insbesondere am unteren Ende des Mantelstücks (10) abgeschlossen. Das Bodenstück (20) kann ebenfalls aus einem Teil oder aus mehreren Teilen, vorzugsweise ebenfalls aus einem Stahlwerkstoff, zusammengesetzt sein und stoffschlüssig mit dem unteren Ende des Mantelteils (10) verbunden sein. Des Weiteren sind mindestens drei zylinderförmige Elemente (30) vorgesehen, welche zumindest abschnittsweise stoffschlüssig mit dem Mantelstück (10) verbunden sind und jeweils an ihrem dem Mantelstück (10) abgewandten Ende einen Anbindungsflansch (31) aufweisen, wobei die zylinderförmigen Elemente (30) derart mit dem Mantelstück (10) verbunden sind, dass das Mantelstück (10) das zylinderförmige Element (30) zumindest abschnittsweise in ihrer Längserstreckung in einen Außenteilabschnitt (32) und in einen Innenteilabschnitt (33) unterteilt, wobei der Außenteilabschnitt (32) mit der Mantelaußenfläche (12) und der Innenteilabschnitt (33) mit der Mantelinnenfläche (13) verbunden sind. Das Bodenstück (20) kann beispielsweise einen kreisförmigen Querschnitt aufweisen und kann in der Dimensionierung insbesondere über den Umfang der einzelnen mit dem Mantelstück (10) stoffschlüssig verbundenen zylindrischen Elemente (30) hinausgehen. Die Anbindungsflansche (11, 31) weisen nicht dargestellte Durchgangsöffnungen zur Aufnahme von Befestigungsmitteln auf. Die zylinderförmigen Elemente (30) sind vorzugsweise konisch ausgebildet oder weisen im Wesentlichen die Form eines Kegelstumpfes auf. Bevorzugt definieren die zylinderförmigen Elemente (30) jeweils eine Längsachse (34) und das Mantelstück (10) eine Längsachse (14), wobei die Längsachsen (34) jeweils in einem spitzen Winkel (α) zur Längsachse (14) verlaufen.

Die zylinderförmigen Elemente (30) sind jeweils einstückig ausgebildet, wobei sie in Längserstreckung einen Schlitz zur Aufnahme des Mantelstücks (10) und Anbindung an das Mantelstück (10) aufweisen, oder sind alternativ aus Teilen zusammengesetzt. Vorzugsweise bestehen das Teil oder die Teile, welche die zylinderförmigen Elemente (30) ergeben, aus einem Stahlwerkstoff. Der Anbindungsflansch (31) kann einstückig an dem dem Mantelstück (10) abgewandten Ende nach innen oder außen ragend angeformt sein, oder vorzugsweise als separates Teil einstückig oder mehrstückig, bevorzugt aus einem Stahlwerkstoff bestehend, an dem dem Mantelstück (10) abgewandten Ende nach innen oder außen ragend stoffschlüssig angebunden sein.

Das Übergangsstück (100) umfasst mindestens eine Ringsteife (40). In diesem Beispiel sind zwei Ringsteifen (40) unterhalb und mit Abstand zum Anbindungsflansch (11) des Mantelstücks (10) innerhalb und außerhalb des Mantelstücks (10) angeordnet. Die Ringsteifen (40) sind ringförmig ausgebildet und können aus einem Teil oder aus mehreren Teilen, vorzugsweise bestehend aus einem Stahlwerkstoff, gebildet sein. Die Ringsteife (40) innerhalb des Mantelstücks (10) ist stoffschlüssig an die Mantelinnenfläche (13) und die Ringsteife (40) außerhalb des Mantelstücks (10) ist stoffschlüssig an die Mantelaußenfläche (12) angebunden. Vorzugsweise kann die innerhalb und/oder außerhalb des Mantelstücks (10) angeordnete Ringsteife (40) zumindest bereichsweise mit dem dem Anbindungsflansch (31) gegenüberliegenden Ende des zylinderförmigen Elements (30) stoffschlüssig verbunden sein. In diesem Beispiel schließen die Ringsteifen (40) die Enden der zylinderförmigen Elemente (30) nach oben hin ab. Bevorzugt sind die nach oben weisenden Enden der Außenteilabschnitte (32) und die nach oben weisenden Enden der Innenteilabschnitte (33) der jeweiligen zylindrischen Elemente (30) stoffschlüssig mit den jeweiligen Ringsteifen (40) verbunden.

Das zylinderförmige Element (30) weist mindestens eine Zugangsöffnung (35) auf. Diese kann dem Außenteilabschnitt (32) und/oder dem Innenteilabschnitt (33), welches nicht dargestellt ist, zugeordnet sein. Alternativ oder zusätzlich kann mindestens eine nicht dargestellte Zugangsöffnung auch in dem Mantelstück (10) eingebracht sein, insbesondere im Bereich des stoffschlüssig zu verbindenden zylinderförmigen Elements (30).

Um im Innenbereich (15) des Mantelstücks (10) ausreichend Platz bzw. Raum zur Installation insbesondere von elektrischen Komponenten bereitzustellen, ist der Innenteilabschnitt (33) des zylinderförmigen Elements (30) zumindest teilbereichsweise abgeschnitten.

Das Bodenstück (20) weist mindestens eine Zugangsöffnung (21) auf, über welche ein nicht dargestellter Kanal mit einem nicht dargestellten Montage-/Revisionsaufzug anschließbar ist.

Der nicht dargestellte Turm einer nicht dargestellten Windenergieanlage kann ein Oberteil in Form eines zylindrischen Turms, ein Unterteil in Form einer Gitterstruktur und ein Übergangsstück (100) nach einer erfindungsgemäßen Ausführung umfassen, wobei das Übergangsstück (100) das Oberteil mit dem Unterteil verbindet. Besonders bevorzugt ist das Übergangsstück (100) über den Anbindungsflansch (11) des zylinderförmigen Mantelstücks (11) mit dem Oberteil und über die Anbindungsflansche (31) der zylinderförmigen Elemente (30) mit dem Unterteil mechanisch verbunden.

Der nicht dargestellte Turm einer nicht dargestellten Windenergieanlage kann für den Onshore- oder Offshore-Bereich ausgelegt sein.

Die beschriebenen Merkmale sind alle, soweit technisch möglich, miteinander kombinierbar.

## Patentansprüche

1. Übergangsstück (100) für einen Turm einer Windenergieanlage,
- mit einem zylinderförmigen Mantelstück (10), welches eine Mantelinnenfläche (13), eine Mantelaußenfläche (12) und einen Anbindungsflansch (11) umfasst,
- mit einem Bodenstück (20), welches das Mantelstück (10) zumindest abschnittsweise einseitig abschließt,
- wobei das Übergangsstück (100) mindestens eine Ringsteife (40) umfasst, wobei die Ringsteife (40) unterhalb und mit Abstand zum Anbindungsflansch (11) des Mantelstücks (10) innerhalb und/oder außerhalb des Mantelstücks (10) angeordnet ist,
- mit mindestens drei zylinderförmigen Elementen (30), welche zumindest abschnittsweise stoffschlüssig mit dem Mantelstück (10) verbunden sind und jeweils an ihrem dem Mantelstück (10) abgewandten Ende einen Anbindungsflansch (31) aufweisen,
**dadurch gekennzeichnet, dass** die zylinderförmigen Elemente (30) derart mit dem Mantelstück (10) verbunden sind, dass das Mantelstück (10) das zylinderförmige Element (30) zumindest abschnittsweise in ihrer Längserstreckung in einen Außenteilabschnitt (32) und in einen Innenteilabschnitt (33) unterteilt, wobei der Außenteilabschnitt (32) mit der Mantelaußenfläche (12) und der Innenteilabschnitt (33) mit der Mantelinnenfläche (13) verbunden sind.

2. Übergangsstück nach Anspruch 1, wobei die zylinderförmigen Elemente (30) konisch ausgebildet sind oder im Wesentlichen die Form eines Kegelstumpfes aufweisen.

3. Übergangsstück nach einem der vorgenannten Ansprüche, wobei die zylinderförmigen Elemente (30) jeweils eine Längsachse (34) und das Mantelstück (10) eine Längsachse (14) definieren, wobei die Längsachsen (34) jeweils in einem spitzen Winkel (α) zur Längsachse (14) verlaufen.

4. Übergangsstück nach einem der vorgenannten Ansprüche, wobei die innerhalb und/ oder außerhalb des Mantelstücks (10) angeordnete Ringsteife (40) zumindest bereichsweise mit dem dem Anbindungsflansch (31) gegenüberliegenden Ende des zylinderförmigen Elements (30) stoffschlüssig verbunden ist.

5. Übergangsstück nach einem der vorgenannten Ansprüche, wobei das zylinderförmige Element (30) mindestens eine Zugangsöffnung (35) aufweist.

6. Übergangsstück nach einem der vorgenannten Ansprüche, wobei der Innenteilabschnitt (33) des zylinderförmigen Elements (30) zumindest teilbereichsweise abgeschnitten ist.

7. Übergangsstück nach einem der vorgenannten Ansprüche, wobei das Bodenstück (20) mindestens eine Zugangsöffnung (21) aufweist.

8. Übergangsstück nach einem der vorgenannten Ansprüche, wobei die Anbindungsflansche (11, 31) Durchgangsöffnungen zur Aufnahme von Befestigungsmitteln aufweisen.

9. Turm einer Windenergieanlage mit einem Oberteil in Form eines zylindrischen Rohrturms, einem Unterteil in Form einer Gitterstruktur und einem Übergangsstück (100) nach einem der vorgenannten Ansprüche, welches das Oberteil mit dem Unterteil verbindet.

10. Turm nach Anspruch 9, wobei das Übergangsstück (100) über den Anbindungsflansch (11) mit dem Oberteil und über die Anbindungsflansche (31) mit dem Unterteil mechanisch verbunden ist.

## Claims

1. Transition piece (100) for a tower of a wind turbine,
- with a cylindrical jacket piece (10), which comprises a jacket inner surface (13), a jacket outer surface (12) and a connecting flange (11),
- with a base piece (20), which closes off the jacket piece (10) on one side at least in sections,
- wherein the transition piece (100) comprises at least one annular stiffening element (40), wherein the annular stiffening element (40) is arranged below and at a distance from the connecting flange (11) of the jacket piece (10) inside and/or outside the jacket piece (10),
- with at least three cylindrical elements (30), which are connected to the jacket piece (10) in a material-bonded manner at least in sections and each have a connecting flange (31) at their end facing away from the jacket piece (10),
**characterized in that**
the cylindrical elements (30) are connected to the jacket piece (10) in such a way that the jacket piece (10) divides the cylindrical element (30) at least in sections in its longitudinal extension into an outer part section (32) and an inner part section (33), the outer part section (32) being connected to the jacket outer surface (12) and the inner part section (33) being connected to the jacket inner surface (13).

2. Transition piece according to claim 1, wherein the cylindrical elements (30) are conical or essentially have the shape of a truncated cone.

3. Transition piece according to any one of the preceding claims, wherein the cylindrical elements (30) each define a longitudinal axis (34) and the jacket piece (10) defines a longitudinal axis (14), wherein the longitudinal axes (34) each extend at an acute angle (α) to the longitudinal axis (14).

4. Transition piece according to any one of the aforementioned claims, wherein the annular stiffening element (40) arranged inside and/or outside the jacket piece (10) is connected in a material-bonded manner at least in regions to the end of the cylindrical element (30) opposite the connecting flange (31).

5. Transition piece according to any one of the preceding claims, wherein the cylindrical element (30) comprises at least one access opening (35).

6. Transition piece according to any one of the preceding claims, wherein the inner part section (33) of the cylindrical element (30) is at least partially cut off.

7. Transition piece according to one of the preceding claims, wherein the base piece (20) comprises at least one access opening (21).

8. Transition piece according to any one of the preceding claims, wherein the connecting flanges (11, 31) have through openings for receiving fastening means.

9. Tower of a wind energy plant having an upper part in the form of a cylindrical tubular tower, a lower part in the form of a lattice structure and a transition piece (100) according to one of the preceding claims, which connects the upper part to the lower part.

10. Tower according to claim 9, wherein the transition piece (100) is mechanically connected to the upper part via the connecting flange (11) and to the lower part via the connecting flanges (31).

## Revendications

1. Pièce de transition (100) pour une tour d'une installation d'énergie éolienne,
- avec une pièce d'enveloppe (10) de forme cylindrique, qui comprend une surface intérieure d'enveloppe (13), une surface extérieure d'enveloppe (12) et une bride de raccordement (11),
- avec une pièce de fond (20), qui ferme la pièce d'enveloppe (10) d'un côté au moins par sections,
- la pièce de transition (100) comprenant au moins une elément de raidissement annulaire (40), l'elément de raidissement annulaire (40) étant disposée en dessous et à distance de la bride d'attache (11) de la pièce d'enveloppe (10), à l'intérieur et/ou à l'extérieur de la pièce d'enveloppe (10),
- avec au moins trois éléments cylindriques (30), qui sont reliés au moins par sections à la pièce d'enveloppe (10) par une liaison de matière et qui présentent chacun à leur extrémité opposée à la pièce d'enveloppe (10) une bride de liaison (31),
**caractérisé en ce que**
les éléments cylindriques (30) sont reliés à la pièce d'enveloppe (10) de telle sorte que la pièce d'enveloppe (10) divise l'élément cylindrique (30) au moins par sections dans son extension longitudinale en une section partielle extérieure (32) et en une section partielle intérieure (33), la section partielle extérieure (32) étant reliée à la surface extérieure d'enveloppe (12) et la section partielle intérieure (33) étant reliée à la surface intérieure d'enveloppe (13).

2. Pièce de transition selon la revendication 1, dans laquelle les éléments cylindriques (30) sont de forme conique ou présentent essentiellement la forme d'un cône tronqué.

3. Pièce de transition selon l'une quelconque des revendications précédentes, dans laquelle les éléments cylindriques (30) définissent chacun un axe longitudinal (34) et la pièce d'enveloppe (10) un axe longitudinal (14), les axes longitudinaux (34) formant chacun un angle aigu ( ) avec l'axe longitudinal (14).

4. Pièce de transition selon l'une des revendications précédentes, dans laquelle l'elément de raidissement annulaire (40) disposée à l'intérieur et/ou à l'extérieur de la pièce d'enveloppe (10) est reliée au moins par zones à l'extrémité de l'élément de forme cylindrique (30) opposée à la bride de liaison (31) par une liaison de matière.

5. Pièce de transition selon l'une quelconque des revendications précédentes, dans laquelle l'élément cylindrique (30) comporte au moins une ouverture d'accès (35).

6. Pièce de transition selon l'une des revendications précédentes, dans laquelle la portion de partie intérieure (33) de l'élément de forme cylindrique (30) est coupée au moins en partie.

7. Pièce de transition selon l'une quelconque des revendications précédentes, dans laquelle la pièce de fond (20) comporte au moins une ouverture d'accès (21).

8. Pièce de transition selon l'une des revendications précédentes, dans laquelle les brides d'attache (11, 31) présentent des ouvertures de passage pour recevoir des moyens de fixation.

9. Tour d'une éolienne comprenant une partie supérieure sous forme d'une tour tubulaire cylindrique, une partie inférieure sous forme d'une structure en treillis et une pièce de transition (100) selon l'une des revendications précédentes, qui relie la partie supérieure à la partie inférieure.

10. Tour selon la revendication 9, dans laquelle la pièce de transition (100) est reliée mécaniquement à la partie supérieure par la bride d'assemblage (11) et à la partie inférieure par les brides d'assemblage (31).
